# NEUE EUROPÄISCHE PATENTSCHRIFT

(11) **EP 0 981 280 B2**
(45) Veröffentlichungstag und Bekanntmachung des Hinweises auf die Entscheidung über den Einspruch: **10.12.2014**
(45) Hinweis auf die Patenterteilung: 06.09.2006
(21) Anmeldenummer: 98919256.2
(22) Anmeldetag: 11.04.1998
(51) Int. Cl.: A23G 1/21, A23G 3/02

(54) **VERFAHREN ZUM HERSTELLEN VON VERZEHRGÜTERN**
METHOD FOR PRODUCING CONSUMABLE ITEMS
PROCEDE POUR LA FABRICATION DE BIENS DE CONSOMMATION

(30) Priorität: 17.05.1997 DE 19720844; 25.07.1997 DE 19732036
(43) Veröffentlichungstag der Anmeldung: 01.03.2000
(60) Teilanmeldung: 02025322.5
(73) Patentinhaber: KMB Produktions AG, 8552 Felben (CH)
(72) Erfinder: KNOBEL, Josef, CH-5586 Wigoltingen (CH)
(74) Vertreter: Weiss, Peter
(86) Internationale Anmeldenummer: PCT/EP1998/002122
(87) Internationale Veröffentlichungsnummer: WO 1998/052425

(56) Entgegenhaltungen:
- EP-A- 0 156 324
- EP-A- 0 589 820
- EP-A- 0 715 813
- EP-A1- 0 715 813
- WO-A-94/12046
- WO-A1-95/32633
- DE-A1- 2 161 458
- DE-A1- 19 535 292
- GB-A- 207 974
- GB-A- 223 245
- GB-A- 777 205
- GB-A- 867 555
- GB-A- 1 483 614
- GB-A- 1 483 614
- SU-A1- 616 053
- US-A- 1 647 944
- US-A- 4 421 773

## Beschreibung

Die vorliegende Erfindung betrifft ein Verfahren zum Herstellen von Verzehrgütern mit einer äusseren Schale, welche durch einen in eine Form eintauchenden temperierten Stempel fliessgepresst hergestellt wird.

Bei einer Reihe von Verzehrgütern ist es notwendig, eine äussere Schale aus einer fliessfähigen Masse herzustellen, wobei diese fliessfähige Masse in einen Hohlraum eingepresst wird und dort durch entsprechende Temperierung erstarrt und so eine fest Form annimmt. Beispielsweise gilt dies für Hundefutter, wenn eine äussere Fettschale hergestellt wird, die ein Fleischgemisch od. dgl. umhüllt. Dabei wird erwärmtes, fliessfähiges Fett in eine Form gebracht und durch ein Druckstempel schalenartig ausgestaltet, wobei der Stempel gekühlt ist und beim Formvorgang die fettartige Schale erstarrt.

In erster Linie, und darauf soll sich die vorliegende Erfindung besonders beziehen, gilt dieser Vorgang für die Herstellung einer Schokoladenschale, die später mit einer Füllung gefüllt wird. Beispielsweise ist aus der GB-PS 207 974 bekannt, einen von einem Kühlmittel durchströmten Stempel in die Schokoladenmasse einzutauchen, wobei das Eintauchen in einem solchen Masse erfolgt, dass die entstehende Schokoladenschale die gewünschte Dicke erhält. Damit der Stempel wieder von der Schokoladenmasse getrennt werden kann, ist der Stempel mit einem entsprechenden Trennmittel versehen, so dass die Schokoladenmasse nicht an der Oberfläche des Stempels haften bleibt.

Aus dem Gebrauchsmuster 93 21 186 (EP 0 589 820 A) und "Süsswarenproduktion" Nr. 8, 2. Jahrgang, 23.04.1997, S. 4, "Frozen-Cone: Praxiserfahrung mit einer neuen Technik" ist ferner bekannt, dass der Stempel bzw. die Vorsprünge oder Kühlkörper an dem Stempel bis auf eine Temperatur unter 0° C bevorzugt unter -15°C bis -36°C abgekühlt werden und dann in die Schokoladenmasse eintauchen. Durch das Abkühlen entsteht auf der Oberfläche des Stempels eine hauchdünne Eisschicht, da der Taupunkt der Umgebungsluft über der Werkzeugtemperatur liegt, die den Stempel von der Schokoladenmasse trennt. Durch die dünne Eisschicht kann es aber zur Fleckenbildung auf dem Stempel kommen, was wiederum unerwünscht ist. Dieses "Frozen-Cone"-Verfahren betrifft auch die Veröffentlichung H. Whetstone, "Moulds and Moudling: Examples and Techniques" aus The Manufacturing Confectioner, June 1996, S. 93-99. Dort wird noch erwähnt, dass der Stempel in einer sehr entfeuchteten Umgebung gehalten werden muss, um eine Eisreifbildung auf der Stempeloberfläche zu vermeiden.

Nach der EP 0 715 813, soll das Stempelelement mindestens auf eine solche Temperatur heruntergekühlt werden, dass der Taupunkt, der die Schokoladenmasse umgebenden Atmosphäre erreicht bzw. unterschritten wird. Auch hierbei beschlägt die der Schokoladenmasse zugewandte Fläche des Stempelelementes vor dem Kontakt mit der Schokoladenmasse.

Aus der WO94/12046 ist schlussendlich ein Verfahren bekannt, bei dem bei Umgebungstemperatur, beispielsweise 20°C oder Temperaturen zwischen der Umgebung und dem Gefrierpunkt gearbeitet werden kann. Jedoch wird ein Verfahren bevorzugt, bei dem jede Oberfläche eine Temperatur von unter 0°C bis ungefähr -40°C hat.

Der vorliegenden Erfindung liegt die Aufgabe zugrunde, ein Verfahren der o.g. Art zu entwickeln, bei dem diese Nachteile und insbesondere die Fleckenbildung nicht auftritt.

Zur Lösung dieser Aufgabe führt, dass der Stempel und/oder die Form aus sehr wärmeleitfähigen Stoff hergestellt wird/werden und der Taupunkt der das Verzehrgut umgebenden Atmosphäre unter der Temperatur des Stempels gehalten wird.

Bevorzugt ist/sind der Stempel und/oder die Form aus Kupfer hergestellt. Kupfer besitzt dabei eine hohe Wärmeleitfähigkeit. Möglich ist auch, dass die mit der Masse des Verzehrgutes in Kontakt kommenden Flächen mit Silber oder einer Silberlegierung beschichtet sind

Durch dieses erfinderische Verfahren wird ein Beschlagen des Stempels bzw. der der Schokoladenmasse zugewandten Flächen des Stempels vermieden, so dass es zu keiner Fleckenbildung kommt. In der Praxis hat sich aber herausgestellt, dass dennoch ein Lösen des Stempels von der Schokoladenmasse sehr gut gelingt, da mit relativ tiefen Temperaturen gefahren wird. Es kommt aber weder zu einer Eisbildung noch zu einer Kondenswasserbildung am Werkzeug.

Ein weiteres Merkmal der vorliegenden Erfindung bezieht sich darauf, dass die Form vibriert wird. Bevorzugt geschieht das Vibrieren gleichmässig und vor dem Eintauchen des Stempels. Der besondere Vorteil der Erfindung liegt darin, dass durch das Vibrieren eine gleichmässige Verteilung der die äussere Schale bildenden Masse stattfindet, so dass es hier zu einer spiegelglatten Oberfläche kommt.

Silber hat nochmals eine höhere Wärmeleitfähigkeit als Kupfer, so dass letztendlich die Wärmeleitfähigkeit an der Oberfläche des Stempels zwischen derjenigen von Kupfer und Silber liegt. Silber hat ferner den Vorteil, dass die Masse des Verzehrgutes nicht haften bleibt.

Damit das ganze Verfahren kontinuierlich durchgeführt werden kann, sollen Stempel und Form gemeinsam während des Temperier- und Fliesspressvorganges bewegt werden. Dabei ist es notwendig, dass Form und Stempel zueinander zentriert werden, weshalb entsprechende Zentrierstifte vorgesehen sind, die in entsprechende Zentrierbohrungen eingreifen.

Ferner wurde festgestellt, dass die Form, die beispielsweise aus Kunststoff bestehen kann, nach mehrmaligem Gebrauch zu Verwerfungen neigt. Deshalb sollen am Stempel bevorzugt federnde Druckstifte vorgesehen sein, welche beim Schliessen des Werkzeuges auf die Form drücken und diese Unebenheiten ausgleichen.

Obwohl die vorliegende Erfindung besonders gut zur Herstellung von Schokoladenschalen geeignet ist, soll sie nicht darauf beschränkt sein, da auch andere Verzehrgüter sehr günstig mit diesem Verfahren hergestellt werden können.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Frontansicht einer Vorrichtung zum Herstellen von Verzehrgütern;
Figur 2 eine Seitenansicht der Vorrichtung gemäss Figur 1;
Figur 3 einen Querschnitt durch ein Werkzeug zum Herstellen von Verzehrgütern.

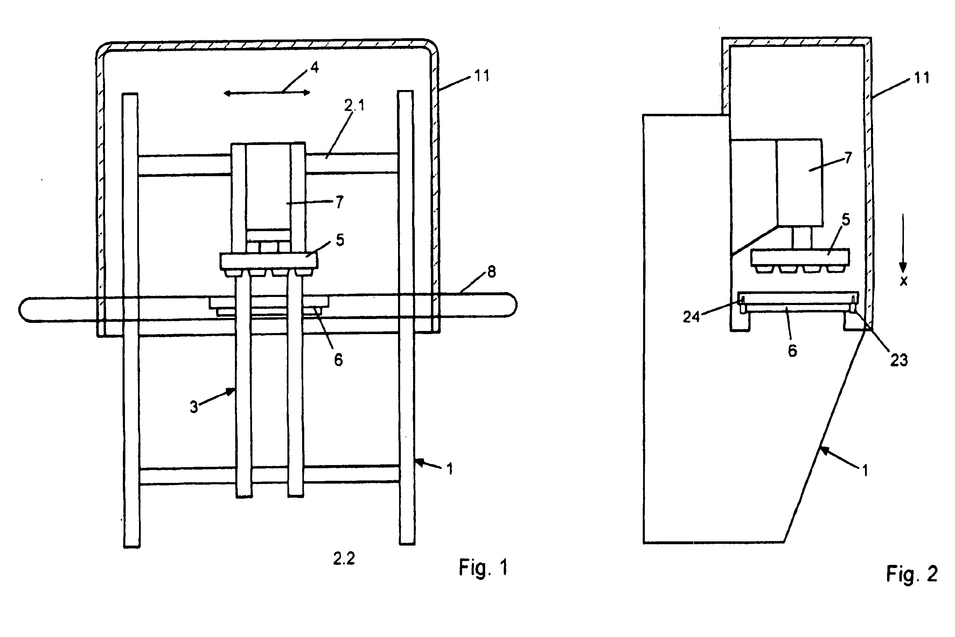

Gemäss Figur 1 weist eine Vorrichtung zur Herstellung von Verzehrgütern einen Maschinenrahmen 1 auf, in dem sich zwei horizontale Führungssäulen 2.1 und 2.2 befinden. An diesen Führungssäulen 2.1 und 2.2 wird ein Schlitten 3 in Richtung des Doppelpfeiles 4 geführt, wobei dieser Schlitten 3 einen Stempel 5 und einen Tisch 6 ebenfalls in Richtung des Doppelpfeiles 4 führt. Der Stempel 5 ist an einer Hubeinrichtung 7 angeordnet und kann in Hubrichtung x (siehe Figur 2) bewegt werden.

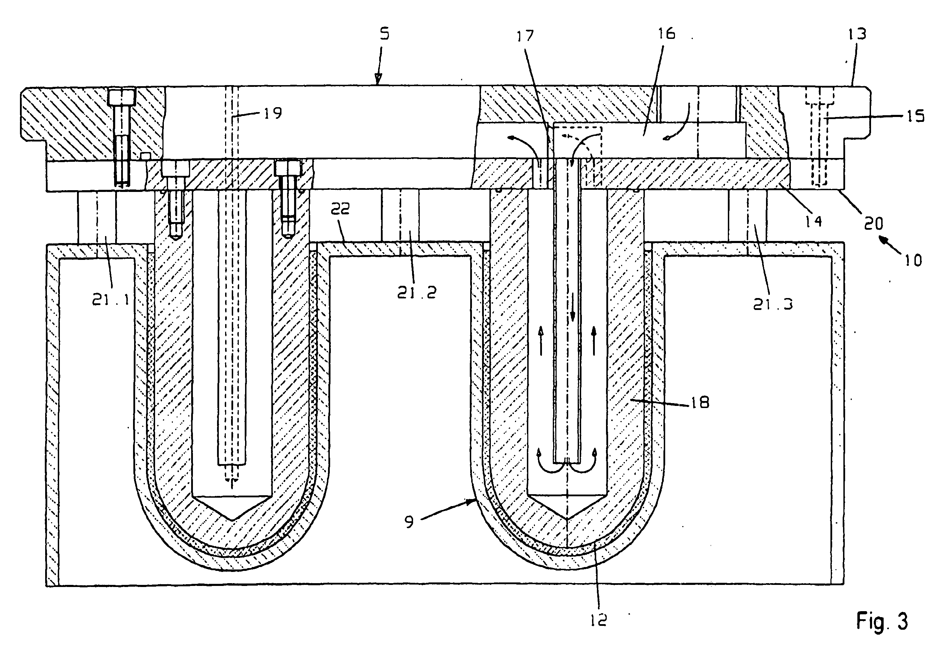

Über den Tisch 6 läuft ein Endlosband 8, auf welches eine in Figur 3 gezeigte Form 9 aufgelegt werden kann. Form 9 bildet zusammen mit dem Stempel 5 ein Werkzeug 10 zur Herstellung von Verzehrgütern. Dieses Werkzeug 10 und ein grosser Teil des Schlittens 3 befindet sich innerhalb eines geschlossenen Gehäuses 11.

Gemäss Figur 3 weist die Form 9 Hohlräume 12 auf, die in Gebrauchslage mit einer Masse zum Herstellen des Verzehrgutes gefüllt werden. Dementsprechend besitzt der Hohlraum 12 auch eine Form, die der gewünschten äusseren Form des Verzehrgutes entspricht.

Der Stempel 5 weist zwei Platten 13 und 14 auf, die über Schrauben 15 miteinander verbunden sind. In beide Platten 13 und 14 sind Kanäle 16 und Steg 17 eingearbeitet, die der Führung eines Kühlmediums dienen. Ferner sind an der Platte 14 Vorsprünge 18 festgelegt, die mit den Hohlräumen 12 zur Herstellung des Verzehrgutes zusammenwirken. Auch in diesen Vorsprüngen 18 wird das Kühlmedium geführt. Ferner ist gestrichelt ein Temperatursensor 19 angedeutet, mit dem die Temperatur des Stempels 5 und insbesondere der Vorsprünge 18 ermittelt werden kann.

Von einer Unterfläche 20 der Platte 14 ragen desweiteren Druckstifte 21.1 und 21.2 ab, welche in Schliesslage des Werkzeuges 10 auf eine Oberfläche 22 der Form 9 drücken. Damit wird die Form 9 auf das Endlosband 8 gedrückt und Verwerfungen der Form 9 ausgeglichen.

Die Funktionsweise der vorliegenden Erfindung ist folgende:

Eine Form 9 wird beispielsweise linksseitig in Figur 1 auf das Endlosband 8 aufgelegt. Neben dem Endlosband 8 läuft bevorzugt eine Kette 23, an der Vorschubstifte 24 vorgesehen sind. Diese Vorschubstifte 24 ragen über das Endlosband 8 hinaus und nehmen die Form 9 mit.

Der Schlitten 3 befindet sich in Figur 1 soweit wie möglich links. Sobald die Form 9 auf dem Tisch 6 angekommen ist, wird der Stempel 5 mittels der Hubeinrichtung 7 abgesenkt, die Vorsprünge 18 greifen in die Hohlräume 12 ein, wobei die Masse des Verzehrgutes sich in dem verbleibenden Hohlraum verteilt. Gleichzeitig drücken die Druckstifte 21.1 und 21.2 auf die Form 9, so dass mögliche Verwerfungen der Form 9 ausgeglichen sind.

Nunmehr fährt der Schlitten 7 mit dem Endlosband 8 mit, wobei gleichzeitig das Verzehrgut in gewünschter Weise temperiert wird.

Sobald der Schlitten 7 in Figur 1 rechtsseitig angekommen ist, wird der Stempel 5 angehoben und die Form 9 freigegeben, die nunmehr aus dem Gehäuse 11 auslaufen kann.

## Patentansprüche

1. Verfahren zum Herstellen von Verzehrgütern mit einer äusseren Schale, welche durch einen in eine Form (9) eintauchenden temperierter Stempel (5) fliessgepresst hergestellt wird, **dadurch gekennzeichnet, dass** der Stempel (5) und/oder die Form aus sehr wärmeleitfähigem Material hergestellt wird/werden und der Taupunkt der das Verzehrgut umgebenden Atmosphäre unter der Temperatur des Stempels (5) gehalten wird.

2. Verfahren nach Anspruch 1, **dadurch gekennzeichnet, dass** der Stempel (5) und/oder die Form aus einem Grundkörper aus im wesentlichen Kupfer besteht und die mit der Masse des Verzehrguts in Kontakt kommenden Flächen Silber oder einer Silberlegierung beschichtet sind.

3. Verfahren nach Anspruch 1 oder 2, **dadurch gekennzeichnet, dass** die Form (9) während und/oder unmittelbar nach dem Einfüllen der Masse vibriert wird.

4. Verfahren nach Anspruch 3, **dadurch gekennzeichnet, dass** die Form (9) gleichmässig vor dem Eintauchen des Stempels (5) vibriert wird.

5. Verfahren nach einem der Ansprüche 1 bis 4, **dadurch gekennzeichnet, dass** die in Kontakt mit der äusseren Schale des Verzehrgutes kommenden Flächen galvanisch mit einer Hartsilberschicht versehen werden.

6. Verfahren nach einem der Ansprüche 1 bis 5, **dadurch gekennzeichnet, dass** StempeI (5) und Form (9) gemeinsam während des Temperier- und Fliesspressvorganges bewegt werden.

7. Verfahren nach einem der Ansprüche 1 bis 6, **dadurch gekennzeichnet, dass** Form (9) und Stempel (5) zueinander zentriert werden.

8. Verfahren nach einem der Ansprüche 1 bis 7, **dadurch gekennzeichnet, dass** Unebenheiten (Verwerfungen) der Oberfläche der Form (9) durch den Stempel (5) ausgeglichen werden.

## Claims

1. Method of manufacturing edible products having an outer shell that is manufactured by flow moulding by means of a temperature-controlled punch (5) that engages into a mould (9),
**characterized in**
**that** the punch (5) and/or the mould are/is manufactured from thermally highly conductive material and the dew point of the atmosphere surrounding the edible product is kept below the temperature of the punch (5).

2. Method according to claim 1, **characterized in that** the punch (5) and/or the mould comprises a basic body made substantially of copper and the surfaces that come into contact with the substance of the edible product are coated with silver or a silver alloy.

3. Method according to claim 1 or 2, **characterized in that** the mould (9) is vibrated during and/or immediately after introduction of the substance.

4. Method according to claim 3, **characterized in that** the mould (9) is vibrated uniformly prior to engagement of the punch (5).

5. Method according to one of claims 1 to 4, **characterized in that** the surfaces that come into contact with the outer shell of the edible product are provided with an electroplated hard silver layer.

6. Method according to one of claims 1 to 5 , **characterized in that** punch (5) and mould (9) are moved jointly during the temperature control and flow moulding operation.

7. Method according to one of claims 1 to 6, **characterized in that** mould (9) and punch (5) are centred relative to one another.

8. Method according to one of claims 1 to 7, **characterized in that** unevenness (warping) of the surface (22) of the mould (9) is compensated by the punch (5).

## Revendications

1. Procédé pour la fabrication de biens de consommation avec une coquille extérieure qui est fabriquée par extrusion par un poinçon (5) thermostatisé plongeant dans un moule (9),
**caractérisé par le fait que**
le poinçon (5) et/ou le moule est ou sont réalisés en un matériau hautement thermoconducteur et que le point de rosée de l'atmosphère entourant le bien de consommation est maintenu au-dessous de la température du poinçon (5).

2. Procédé selon la revendication 1, **caractérisé par le fait que** le poinçon ( 5) et/ou le moule consiste en un corps de base réalisé substantiellement en cuivre et que les surfaces entrant en contact avec la masse du bien de consommation sont revêtues d'argent ou d'un alliage d'argent.

3. Procédé selon la revendication 1 ou 2, **caractérisé par le fait que** le moule (9) est vibré pendant et/ou immédiatement après le remplissage de la masse.

4. Procédé selon la revendication 3, **caractérisé par le fait que** le moule (9) est vibré de manière uniforme avant que n'y plonge le poinçon (5).

5. Procédé selon l'une des revendications 1 à 4, **caractérisé par le fait que** les surfaces entrant en contact avec la coquille extérieure du bien de consommation sont pourvues galvaniquement d'une couche d'argent dure.

6. Procédé selon l'une des revendications 1 à 5, **caractérisé par le fait que** le poinçon (5) et le moule (9) sont déplacés ensemble pendant l'opération de thermostatisation et d'extrusion.

7. Procédé selon l'une des revendications 1 à 6, **caractérisé par le fait que** le moule (9) et le poinçon (5) sont centrés l'un par rapport à l'autre.

8. Procédé selon l'une des revendications 1 à 6, **caractérisé par le fait que** les irrégularités (déformations) de la surface (22) du moule (3) sont compensées par le poinçon (5).
